# EUROPEAN PATENT APPLICATION

(11) **EP 2 607 158 A1**
(43) Date of publication of application: **26.06.2013**
(21) Application number: 12198073.4
(22) Date of filing: 19.12.2012
(51) Int. Cl.: B60N 2/66, B60N 2/44

(54) **Vehicle seat**

(30) Priority: 20.12.2011 JP 2011278718; 20.12.2011 JP 2011278723
(71) Applicant: TS Tech Co., Ltd., Asaka-shi, Saitama 351-0012 (JP)
(72) Inventor: Omori, Sousaku, Shioya-gun, Tochigi 329-1217 (JP); Kikuchi, Masato, Shioya-gun, Tochigi 329-1217 (JP)
(74) Representative: Plougmann & Vingtoft A/S

(57) **Abstract**

A vehicle seat (1) comprises: a seat body (2) including a seat bottom (4) and a seat back (5); a support device (3) provided in the seat body and configured to adjust supporting positions for supporting a lumbar region of an occupant; a pair of right and left seat back side frames (51) constituting right and left frames of the seat back; and at least one bladder (31A, 31B) configured to be inflatable and deflatable to change the supporting positions and arranged between the right and left seat back side frames and constituting the support device. The bladder (31 A, 31 B) comprises an air chamber (31 C) having a center portion and both end portions along a lateral direction, and the center portion of the air chamber has a portion which is thinner in thickness in the front-rear direction than the both end portions in an inflating state of the bladder.

## Description

### BACKGROUND OF THE INVENTION

The present invention relates to a vehicle seat comprising a support device capable of adjusting supporting positions for supporting a lumbar region of an occupant.

There is known a vehicle seat equipped with a lumbar support (support device), by which a supporting position for supporting a lumbar spine portion of an occupant sitting on the seat can be adjusted by adjusting the pressure within a bladder provided in the back rest (JP 2001-150988 A).

There is also known an automobile seat equipped with side support members at both sides of an occupant sitting on the seat, each of which side support members comprises a base plate and a bladder and is configured to adjust a supporting position for the occupant by adjusting the air pressure of the bladder (JP 60-234037 A).

In order to prevent fatigue of the occupant due to sitting for long time, there is a growing demand for improving holding of the occupant.

It is therefore an object of the present invention to provide a vehicle seat which can improve holding of the occupant by the support device.

Further, in the automobile seat equipped with the side support members, each support member may disadvantageously interfere with another member provided around the support member. It is therefore necessary to provide a space between the support member and the another member, which is a limiting factor for reducing the size of the vehicle seat equipped with the right and left support members.

In view of this, it is an object of the present invention to provide a vehicle seat which can suppress interference between the support member and another member while reducing the size of the vehicle seat.

### SUMMARY OF THE INVENTION

According to the present invention, there is provided a vehicle seat comprising:
a seat body including a seat bottom and a seat back; a support device provided in the seat body and configured to adjust supporting positions for supporting a lumbar region of an occupant; a pair of right and left seat back side frames constituting right and left frames of the seat back; and at least one bladder configured to be inflatable and deflatable to change the supporting positions and arranged between the right and left seat back side frames and constituting the support device. In this vehicle seat, the bladder comprises an air chamber having a center portion and both end portions along a lateral direction, and the center portion of the air chamber has a portion which is thinner in thickness in the front-rear direction than the both end portions in an inflating state of the bladder.

With this configuration, since the center portion of the air chamber has a portion which is thinner in thickness in the front-rear direction than the both end portions in an inflating state of the bladder, the upper body of the occupant seated on the vehicle seat fits into a thinner portion of the bladder which is thinner in thickness in the front-rear direction (*i.e.,* a portion which is recessed deeper than the both end portions in the lateral direction), and at the same time, the upper body of the occupant is supported and wrapped from right and left sides by the both end portions. This can improve holding of the occupant by the support device.

In the aforementioned vehicle seat, the air chamber is formed only at the both end portions in a predetermined region extending downward from an upper end of the air chamber.

With this configuration, since the air chamber is formed only at the both end portions in the predetermined region of the bladder, the air chamber has a greater range of motion at the both end portions in the predetermined region, so that the bladder deforms easily into a shape corresponding to the upper body of the occupant. This can further improve holding of the occupant by the support device.

The aforementioned vehicle seat may further comprise a bladder mount member which is disposed between the right and left seat back side frames and to which the bladder is attached, and the bladder may be attached to the bladder mount member through two engagement portions arranged side by side in the lateral direction at an upper portion of the bladder, and further a hose for supplying gas from a pump to the air chamber may pass through between the two attachment portions and may be connected to an upper portion of the air chamber.

With this configuration, since the bladder is not easily deflectable in a space between the two engagement portions provided at the upper portion of the bladder and the hose passes through this space and is connected to the upper portion of the air chamber, the connecting portion of the hose can be stabilized (held so as not to move easily) as compared to the arrangement where the hose is connected to other portion around the periphery of the air chamber. This can restrain a load from being applied to the connecting portion of the hose, so as to prevent the hose from being come off the bladder.

In the aforementioned vehicle seat, the bladder may have a recess by which at least the center portion of the air chamber is recessed downward in the inflating state of the bladder, and a hose for supplying gas from a pump to the air chamber may be connected to the air chamber in the recess.

With this configuration, the bladder is configured such that at least the upper center portion of the air chamber in the lateral direction is recessed downward to provide a recess, and the hose is connected to the air chamber in this recess. Accordingly, the connecting portion where the hose and the air chamber are connected together can be positioned such that the upper end of the connecting portion is at the same level or lower than the upper end of the air chamber. Therefore, the whole size of the bladder to which the hose has been connected can be reduced in the upper-lower direction.

In the aforementioned vehicle seat, the bladder may be formed by bonding two sheet-like members together, and the hose may pass through a gap between the two sheet-like members at a region above a connecting portion in which the hose is connected to the air chamber.

With this configuration, since the bladder is formed by bonding two sheet-like members together, and the hose is connected to the air chamber after passing through a gap between the two sheet-like members, the sheet-like members can restrict movement of the hose end portion. This can prevent unwanted load from being applied to the hose as well as prevent interference between the hose and another member, so as to prevent damage of the hose.

The aforementioned vehicle seat may further comprise a plate-like bladder mount member which is disposed between the right and left seat back side frames and to which the bladder is attached, and the bladder mount member may have at least one mount portion for attachment of the bladder, and the mount portion may be formed on a top portion of a protruding portion, which protrudes forward from a bottom of a recess formed in the bladder mount member and recessed backward.

With this configuration, since the entire shape of the bladder mount member becomes uneven, the rigidity of the bladder mount member can be improved. Further, since the bladder is attached to a rigid member, the stability of the bladder can be enhanced.

The aforementioned vehicle seat may further comprise right and left support members attached to the right and left seat back side frames, respectively, and each configured to deform or move to change the supporting positions. Further, each of the right and left support members may be respectively attached to the right and left seat back side frames at a rear end portion of the support member, which serves as an attachment portion used for attachment to the seat back side frame, and a cutout portion for preventing interference between the support member and another member may be provided at a rear portion of the support member above or below the attachment portion.

With this configuration, since each support member has a cutout portion, the support member can be disposed closer to another member (member provided around the support member) while suppressing interference between the support member and the another member. Therefore, the support member and the another member can be arranged compactly, so that the size of the vehicle seat can be further reduced.

In the aforementioned vehicle seat, each of the right and left support members has a pair of attachment portions for attachment to the seat back side frame at positions above and below the cutout portion.

With this configuration, it is possible to stably attach each of the support members to the seat back side frame while suppressing interference between the support member and the another member.

In the aforementioned vehicle seat, the another member is located in the cutout portion.

With this configuration, since each of the support members and the another member can be arranged closer to each other, the support member and the another member can be arranged more compactly. Therefore, the size of the vehicle seat can be further reduced.

In the aforementioned vehicle seat, each of the right and left support members is a bladder having an air chamber and configured to be inflatable and deflatable for deformation, and the air chamber may extend around the cutout portion.

With this configuration, the volume of the air chamber can be enlarged while suppressing interference between the support member (bladder) and the another member, so that the air chamber has a greater range of motion. Therefore, the adjustable range of the support device can be increased.

The aforementioned vehicle seat may further comprise right and left bladders each configured to be inflatable and deflatable for deformation, a pump for supplying gas to the right and left bladders, each of which bladders serves as the support member, and a hose for supplying gas from the pump to the right and left bladders. Further, the hose may be bifurcated at an intermediate portion thereof in the lateral direction and between the right and left seat back side frames into two sections which are connected to the right and left bladders, respectively.

With this configuration, since the hose for supplying gas to the right and left bladders is bifurcated at an intermediate portion thereof in the lateral direction and between the right and left seat back side frames into two sections, the hoses from the bifurcated portion to the air chambers of the right and left bladders have substantially the same length. This makes it possible to substantially evenly supply gas to the right and left bladders, so that the right and left bladders can be deformed substantially uniformly with each other.

The aforementioned vehicle seat may further comprise a plate-like joint member disposed to extend between lower portions of the right and left seat back side frames and configured to connect the right and left seat back side frames. The hose may be disposed along the joint member, and the joint member may have a first wall portion covering a front side or a rear side of the hose, and a second wall portion extending from one of an upper end and a lower end of the first wall portion and covering an upper side or a lower side of the hose, and further the hose may be arranged along a corner formed by the first wall portion and the second wall portion.

With this configuration, since the hose is arranged along the corner formed by the first wall portion and the second wall portion of the joint member, the hose can be protected by a relatively simple configuration including the first wall portion and the second wall portion. Further, the movement of the hose can be restrained by the first wall portion and the second wall portion to prevent damage of the hose.

The aforementioned vehicle seat may further comprise a pair of plate members each disposed adjacent to and at an outer side of the bladder in the lateral direction and configured to regulate a direction along which the bladder inflates. Further, each of the plate members may have a cutout portion having a shape corresponding to the cutout portion of the support member, so as to prevent interference with the another member.

With this configuration, since a pair of plate members are provided and each of the plate members has a cutout portion having a shape corresponding to the cutout portion of the support member, it is possible to change the direction along which the bladder inflates to a predetermined direction (inward in the lateral direction) while suppressing interference between the plate member and the another member. Further, since the cutout portion is provided in the plate member, the installation space for the plate member can be minimized.

The aforementioned vehicle seat may further comprise a pair of tubular connectors each configured to connect the bladder and an end of the hose and to allow gas flowed from the hose to be supplied to the bladder. Further, the hose may be fixed to the seat back side frame, together with the tubular connector, at an insertion portion where the tubular connector is inserted into the hose.

With this configuration, since the hose is fixed to the seat back side frame, together with the connector, at an insertion portion where the connector is inserted into the hose, the hose and the connector can be fixed at the same time. This can improve the workability for assembling the vehicle seat. Further, as compared to the configuration in which the hose is fixed directly to the seat back side frame without the connector, twisting of the hose can be suppressed.

### BRIEF DESCRIPTION OF DRAWINGS

To better understand the claimed invention, and to show how the same may be carried into effect, reference will now be made, by way of example only, to the accompanying drawings.
FIG. 1 is a perspective view of a vehicle seat according to one embodiment of the present invention.
FIG. 2 is a schematic view of a support device.
FIG. 3 is a sectional view taken along the line A-A of FIG. 1.
FIG. 4 shows a pan frame as viewed from below.
FIG. 5 is a sectional view taken along the line B-B of FIG. 4.
FIG. 6A shows a seat back frame as viewed from front.
FIG. 6B is a sectional view taken along the line C-C of FIG. 6A.
FIG. 7 is a perspective view of a pressure-receiving member and seat back side frames as viewed from diagonally forward right.
FIG. 8 is a view showing the pressure-receiving member and the seat back side frames as viewed from rear.
FIG. 9 is a sectional view taken along the line D-D of FIG. 7.
FIG. 10 is a view showing the left seat back side frame and a side bracket as viewed from an inner side between the seat back side frames.
FIG. 11 is a view showing the seat back frame, and the bladders and the pressure-receiving member which are arranged behind an occupant.
FIG. 12A is a front view of a front-side bladder.
FIG. 12B is a front view of a rear-side bladder.
FIG. 13 is a perspective view of the front-side bladder in an inflating state.
FIG. 14 is a view showing the left seat back side frame and the bladder as viewed from an inner side between the seat back side frames.
FIG. 15A is a perspective view showing the left seat back side frame, the side bracket, a plate member and the bladder.
FIG. 15B is an enlarged perspective view showing a claw portion of the plate member.
FIG. 15C is an enlarged perspective view showing a claw portion of the plate member.
FIG. 16A is a view explaining the bladder in a deflating state and the plate member, which are disposed at the left-side of an occupant, as viewed from above.
FIG. 16B is a view explaining the bladder in an inflating state and the plate member, which are disposed at the left-side of an occupant, as viewed from above.
FIG. 17 explains the manner of connecting a modified hose and the bladder disposed at the rear of an occupant.
FIG. 18 is a perspective view of a bladder according to the first modification, which is to be disposed at the rear of an occupant.
FIG. 19 is a perspective view of a bladder according to the second modification, which is to be disposed at the rear of an occupant.

### DESCRIPTION OF EMBODIMENTS

With reference to the drawings, one embodiment of the present invention will be described. In describing the present invention, the front/rear (forward/rearward or ahead/behind), right/left and upper/lower (upward/downward) directions are designated as from the viewpoint of an occupant sitting on the seat.

### <Overall configuration of vehicle seat>

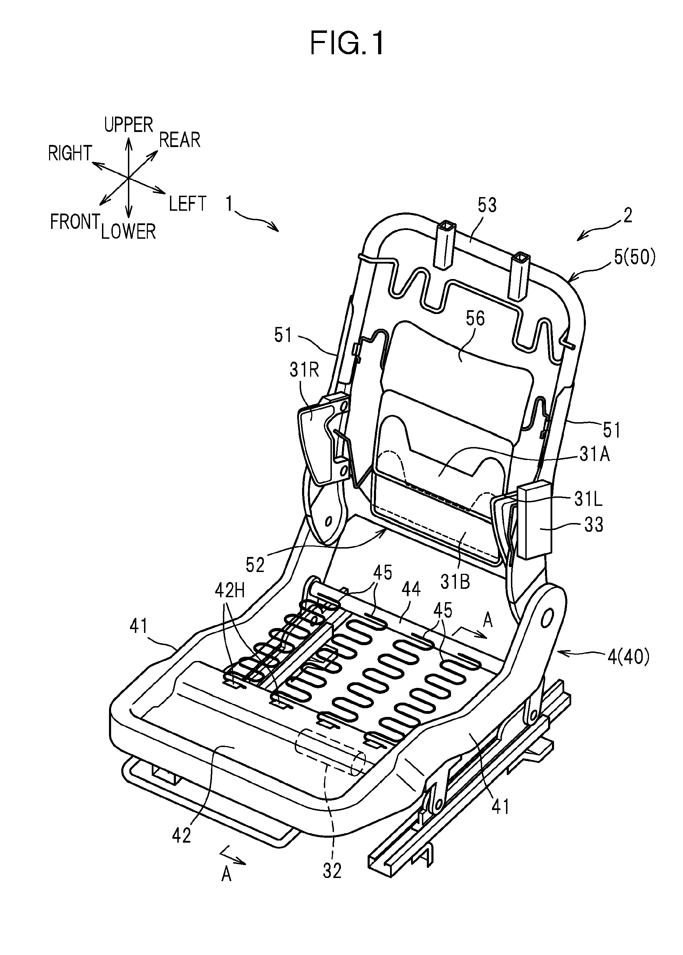

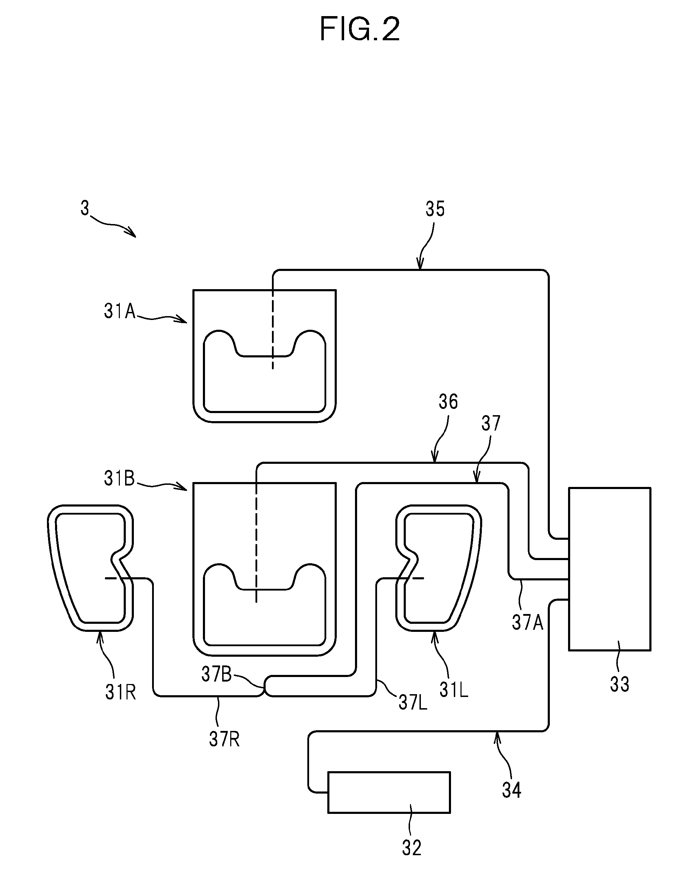

As seen in FIG. 1, a car seat 1 as an example of a vehicle seat mainly includes a seat body 2 and a support device 3 (*see* FIG. 2) provided in the seat body 2. The seat body 2 mainly includes a seat bottom 4 on which an occupant sits, a seat back 5 attached to the seat bottom 4 through a reclining mechanism, and a head rest (not shown).

The seat bottom 4 has a seat bottom frame 40, and an outside of the seat bottom frame 40 is covered with a cushion material (not shown), for example, made of urethane foam, and a car seat skin material (not shown), for example, made of synthetic leather or fabric. The seat back 5 has a seat back frame 50, and an outside of the seat back frame 50 is covered with a cushion material (not shown), for example, made of urethane foam, and a car seat skin material (not shown), for example, made of synthetic leather or fabric. As seen in FIGS. 1 and 2, the support device 3 mainly includes four bladders 31A, 31B, 31R, 31L, a pump 32 for supplying air (gas) to the bladders 31A, 31B, 31R, 31L, a control unit 33 for adjusting amounts of inflation of the bladders 31A, 31B, 31R, 31L, and hoses 34-37 having flexibility.

The bladders 31A, 31B support a lumbar region of an occupant sitting on the car seat 1 from the back side of the occupant, and they are disposed between right and left seat back side frames 51. The bladders 31R, 31L support the lumbar region of the occupant from the right side and the left side of the occupant, and they are disposed at inner surfaces of the right and left seat back side frames 51. The control unit 33 is fixed to a left-side outer surface of the left seat back side frame 51. The control unit 33 includes a valve unit and a relief valve (both not shown) which are openable and closable, and a control board (not shown) for controlling the amount of opening/closing the valve unit.

The hose 34 connects the pump 32 and the control unit 33, the hose 35 connects the bladder 31A and the control unit 33, and the hose 36 connects the bladder 31B and the control unit 33. The hose 37 has one end connected to the control unit 33. The hose 37 is bifurcated at an intermediate portion thereof into two sections, and ends of these sections are connected to the bladder 31R and the bladder 31L. Accordingly, the amounts of inflation of the bladder 31A, the bladder 31B, and the bladders 31R, 31L are individually adjustable in this embodiment.

In this support device 3, the valve unit of the control unit 33 is normally closed. When the occupant manipulates a controller (not shown), the valve unit opens so that air is supplied from the pump 32 to the bladders 31A, 31B, 31R, 31L to inflate the bladders 31A, 31B, 31R, 31L. Further, when pressures are applied from the occupant to the bladders 31A, 31B, 31R, 31L while the valve unit is opened, the bladders 31A, 31B, 31R, 31L deflate. This makes it possible to change (adjust) supporting positions for supporting the lumbar region of the occupant. An excessive amount of air supplied from the pump 32 to the control unit 33, and air forced out from the bladders 31A, 31B, 31R, 31L are discharged outside through the relief valve of the control unit 33.

### <Detailed structure of seat bottom>

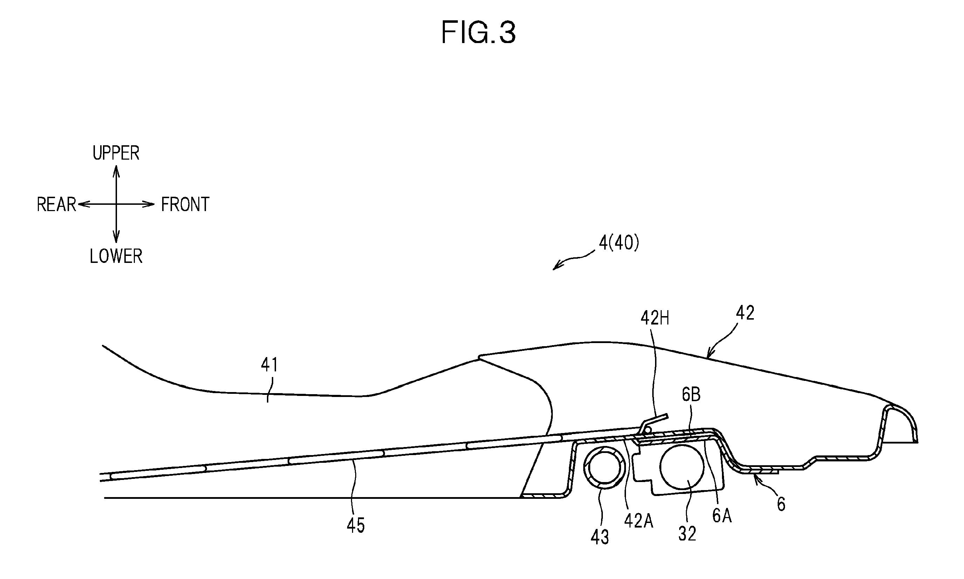

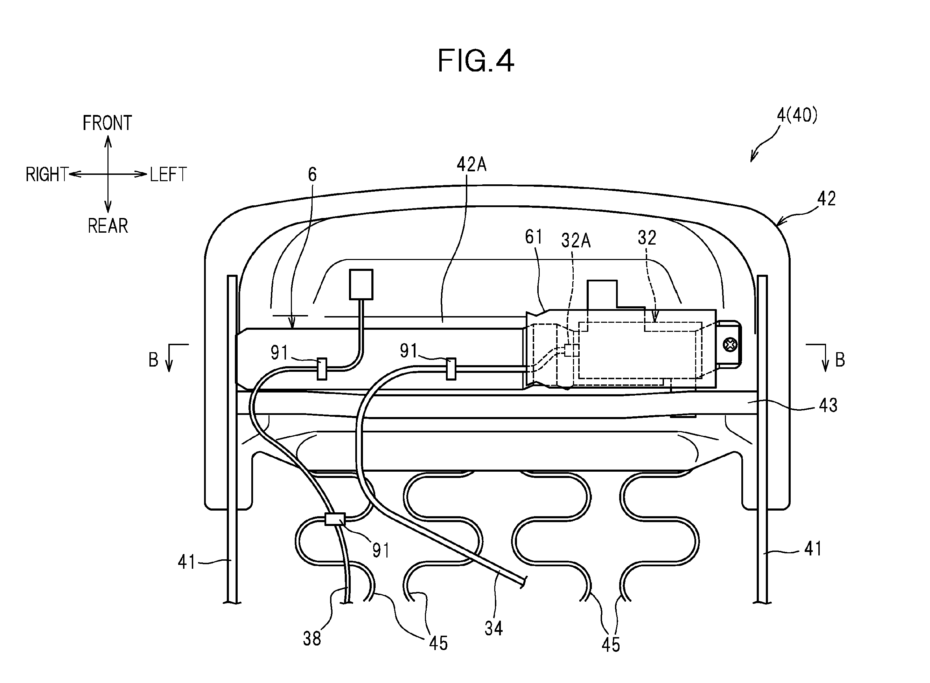

As best seen in FIG. 1, the seat bottom frame 40 mainly consists of right and left seat bottom side frames 41 which constitute right and left frames of the seat bottom 4, a pan frame 42 as a connecting member, an anti-submarine pipe 43 (*see* FIGS. 3 and 4) as an anti-submarine member, a rear-side connecting pipe 44, and a pump mounting bracket 6 (*see* FIGS. 3-5). Each of the seat bottom side frames 41 and the pan frame 42 is formed by press working a sheet metal.

The pan frame 42 extends in a lateral direction and connects front portions of the right and left seat bottom side frames 41. As best seen in FIG. 3, the pan frame 42 has a recessed portion 42A at its bottom surface, which is recessed from lower to upper portions of the pan frame 42. Further, hooks 42H are formed at an upper surface of the pan frame 42 (corresponding to the bottom of the recessed portion 42A). Seat springs 45 as an occupant supporting member for supporting an occupant seated on the seat bottom 4 are provided between the hooks 42H formed on the pan frame 42 and the rear-side connecting pipe 44 and held under tension (*see* also FIG. 1).

The anti-submarine pipe 43 and the rear-side connecting pipe 44 (*see* FIG. 1) are metallic pipes extending in the lateral direction, and they are provided between the right and left seat bottom side frames 41. The anti-submarine pipe 43 suppresses submarine phenomenon in which an occupant tends to be thrown forward while being sunk down in the seat bottom 4 in a collision of a vehicle (frontal collision). The anti-submarine pipe 43 is provided to connect front portions of the right and left seat bottom side frames 41. The anti-submarine pipe 43 is disposed under the pan frame 42. More specifically, the anti-submarine pipe 43 is located in the recessed portion 42A formed in the pan frame 43 at a position closer to the rear end of the recessed portion 42A. As seen in FIG. 1, the rear-side connecting pipe 44 connects rear portions of the right and left seat bottom side frames 41.

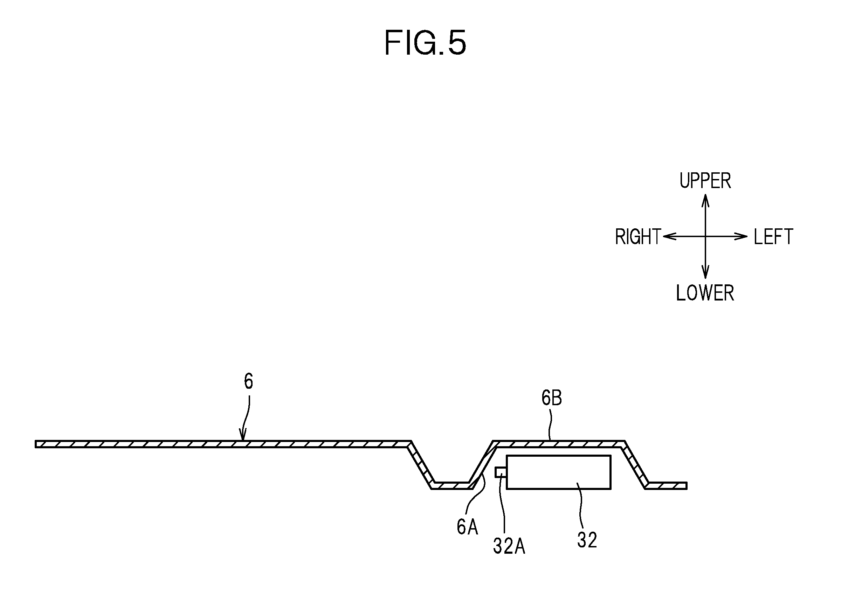

As best seen in FIG. 5, the pump mounting bracket 6 is a plate-like member extending in the lateral direction, and has a recessed portion 6A which is recessed from lower to upper portions of the pump mounting bracket 6. The pump mounting bracket 6 has a raised portion 6B formed in the reverse side of the recessed portion 6A. As best seen in FIG. 3, the pump mounting bracket 6 is located in the recessed portion 42A of the pan frame 42 and mounted to the pan frame 42.

The pump 32 is stored in a cushioned leather bag 61 (*see* FIG. 4), and is located in the recessed portion 6A of the pump mounting bracket 6 and fixed to the pump mounting bracket *6* (*see* also FIG. 5). Accordingly, the pump 32 is located in the recessed portion 42A of the pan frame 42 and disposed under the pan frame 42.

Further, the pump 32 is located in the recessed portion 42A of the pan frame 42 at a position closer to the front end of the recessed portion 42A. In other words, the pump 32 is disposed of the anti-submarine pipe 43 which is also located in the recessed portion 42A. To be more specific, the pump 32 and the anti-submarine pipe 43 are located in the recessed portion 42A of the pan frame 42 and arranged one behind another in a front-rear direction (with their axes directions extending in the lateral direction), namely, at least parts of the pump 32 and the anti-submarine pipe 43 are overlapped with each other as viewed from the front-rear direction.

Further, as seen in FIG. 4, the pump 32 is disposed substantially parallel to a center portion of the anti-submarine pipe 43 such that a longitudinal direction of the pump 32 (*i.e.,* direction in which the axis of the cylinder extends) is oriented in the lateral direction and that it is disposed between the right and left seat bottom side frames 41 at a position closer to the left seat bottom side frame 41. The pump 32 has a supply outlet 32A which is an outlet of air, and the pump 32 is oriented and mounted between the right and left seat bottom side frames 41 such that the supply outlet 32A is located at or closer to a center portion between the right and left seat bottom side frames 41. To be more specific, the pump 32 has one end portion (left end portion) as a first end portion where the supply outlet 32A is not provided and the other end portion (right end portion) as a second end portion where the supply outlet 32A is provided, in the longitudinal direction of the pump 32, and the pump 32 is disposed between the right and left seat bottom side frames 41 such that the one end portion is located closer to one of the right and left seat bottom side frames 41 (with the one end portion facing the left seat bottom side frame 41) and the other end portion is located at or closer to the center portion between the right and left seat bottom side frames 41.

The hose 34 connected to the supply outlet 32A of the pump 32, a harness 38 connecting the controller and the control unit 33, and other parts are bundled together at several places using binding bands 91 and fixed, for example, to the pump mounting bracket 6 and the seat springs 45, so that they can be prevented from sagging or moving due to vibration or pressure at the time of supplying air.

### <Detailed structure of seat back>

As best seen in FIG. 1, the seat back frame 50 mainly consists of right and left seat back side frames 51 which constitute right and left frames of the seat back 5, a member frame 52 as a joint member, and a substantially U-shaped pipe frame 53 configured to connect upper portions of the right and left seat back side frames 51. A pressure-receiving member 56 as a bladder mount member is disposed between the right and left seat back side frames 51.

To make sure, the front/rear (forward/rearward or ahead/behind) and upper/lower (upward/downward) directions are designated in the following description as from the view point of an occupant seated on the car seat 1 while the seat back 5 is not being reclined through the reclining mechanism.

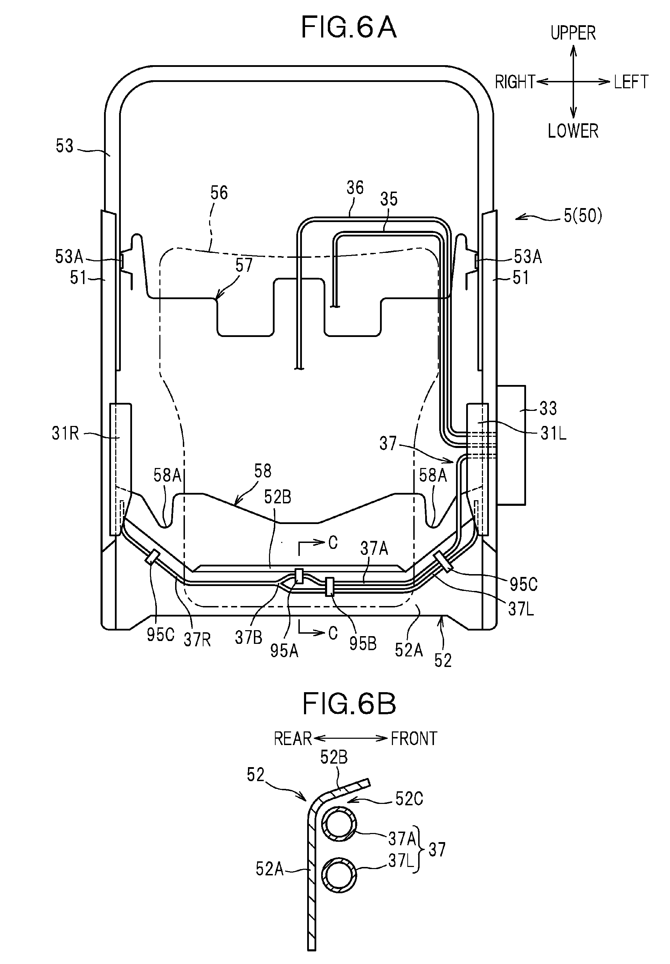

The member frame 52 is disposed to extend between lower portions of the right and left seat back side frames 51. The member frame 52 is a plate-like member for connecting the right and left seat back side frames 51. As seen in FIGS. 6A and 6B, the member frame 52 has a rear wall portion 52A as a first wall portion and a flange portion 52B as a second wall portion extending diagonally upward and forward from an upper end of the rear wall portion 52A.

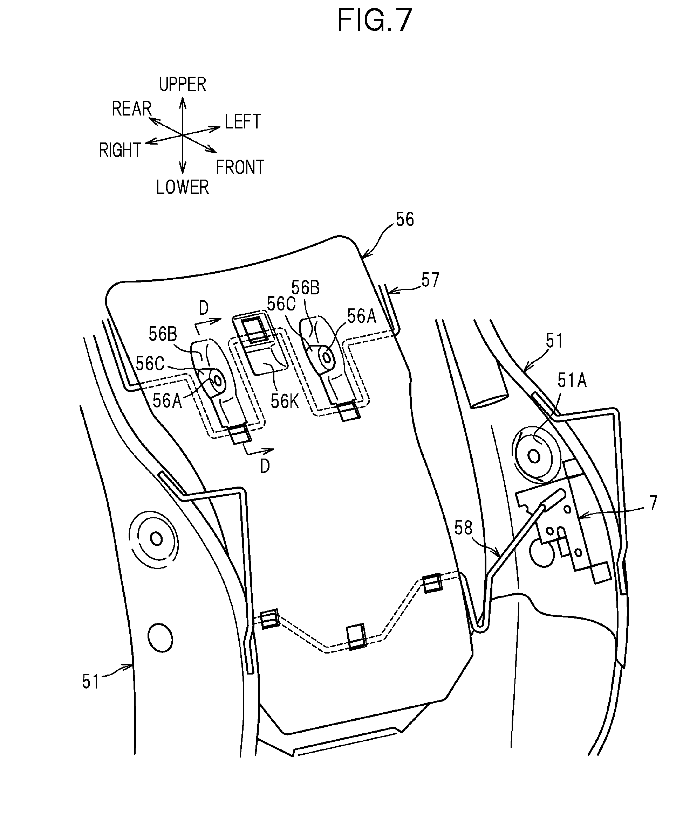

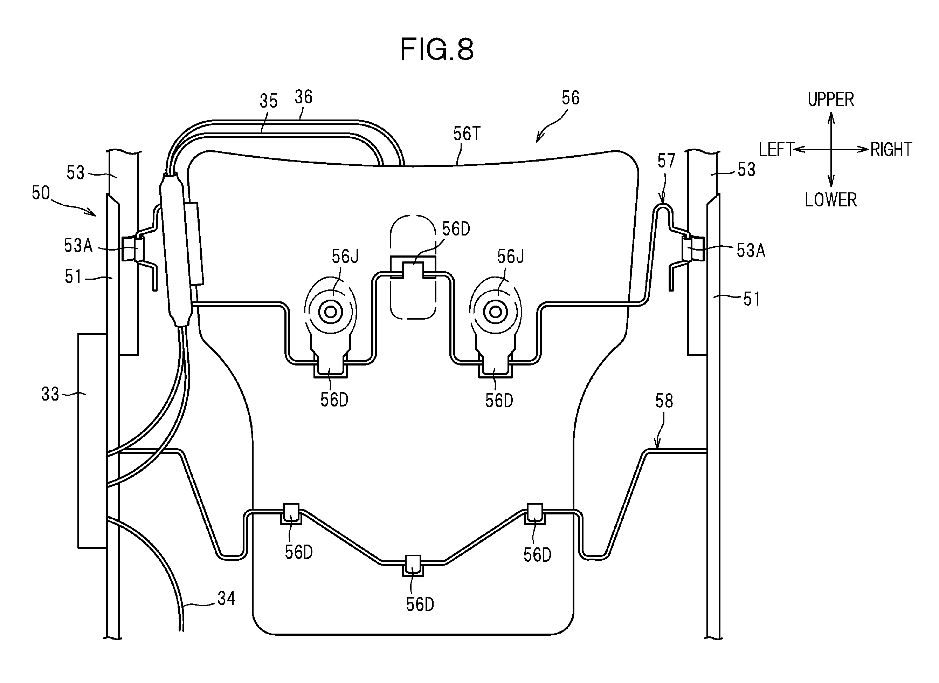

As seen in FIG. 7, the pressure-receiving member 56 is rectangular in shape and made of plastic or the like. The pressure-receiving member 56 is attached to the seat back side frames 51 and the pipe frame 53 mainly through upper and lower connecting wires 57, 58. To be more specific, as viewed from rear in FIG. 8, the upper connecting wire 57 and the lower connecting wire 58 are engaged with the pressure-receiving member 56 through a plurality of claw portions 56D. Right and left end portions of the upper connecting wire 57 extending beyond the pressure-receiving member 56 are bent and attached to supporting portions 53A fixed to the pipe frame 53. Right and left end portions of the lower connecting wire 58, which is a mounting member, extending beyond the pressure-receiving member 56 are bent and attached to side brackets 7 fixed to the inner surfaces of the seat back side frames 51 (*see* FIG. 7).

According to the pressure-receiving member 56 attached as described above, when the vehicle is hit from behind or at a rear-side crash of the vehicle running backward, a load greater than a predetermined value is applied from the occupant to the pressure-receiving member 56 in the rearward direction, so that the bent portions of the upper connecting wire 57 and the lower connecting wire 58 deflect to cause the pressure-receiving member 56 to move rearward relative to the seat back side frames 51. Accordingly, the upper body of the occupant moves rearward and sinks on the seat back 5. This can mitigate the impact of the load on the occupant during the collision.

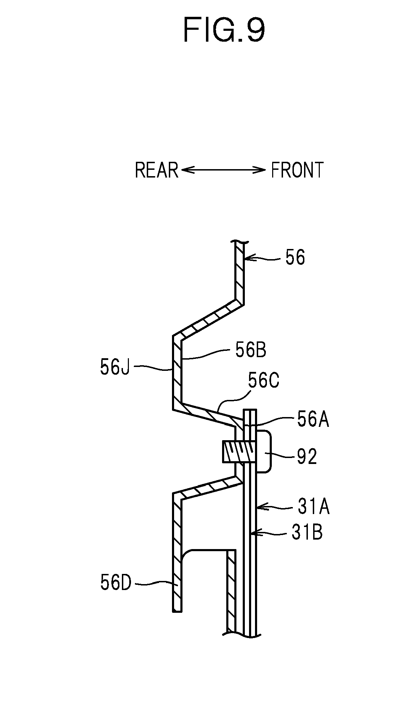

It is to be noted that the upper connecting wire 57 passes through the rear side of the pressure-receiving member 56 in such a manner as to be bent to avoid protruding portions 56J formed in the reverse side of recesses 56B to be described later, and is engaged with the claw portions 56D which are located below the protruding portions 56J and extends downward from top portions of the protruding portions 56J (see also FIG. 9).

As best seen in FIGS. 7 and 9, the pressure-receiving member 56 has a pair of mount portions 56A to which bladders 31A, 31B to be described later are attached. The mount portions 56A are provided side by side in the lateral direction at an upper portion of the pressure-receiving member 56 with a predetermined space provided therebetween. Each mount portion 56A is formed on the top portion of the protruding portion 56C, which protrudes forward from the bottom of a recess 56B formed in the upper portion of the pressure-receiving member 56 and recessed backward. Further, each mount portion 56A has a through-opening (shown without a reference numeral) for threaded engagement with a screw 92 which is used for fixing the bladders 31A, 31B.

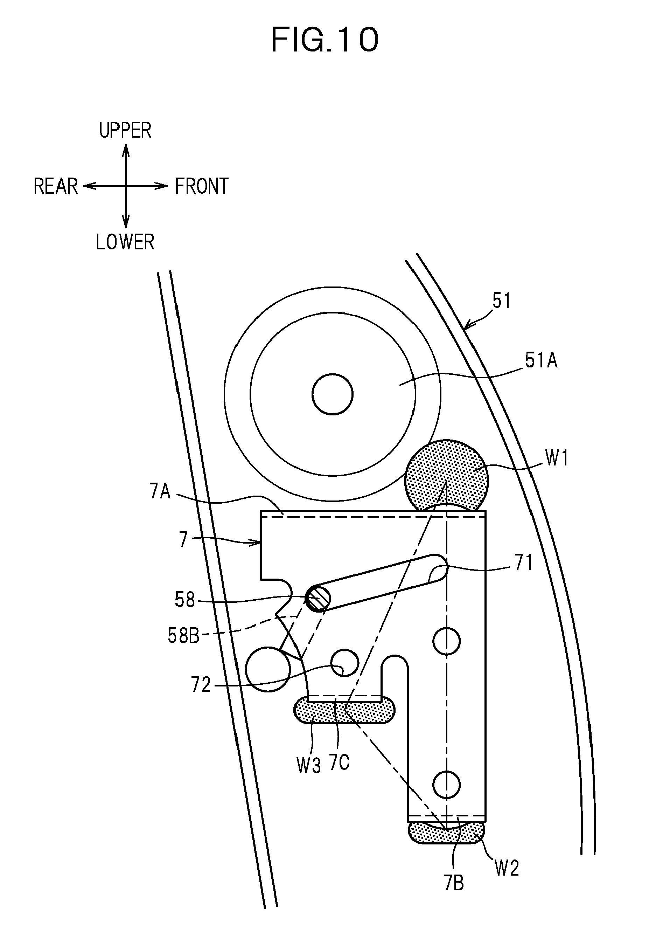

As seen in FIG. 10, each side bracket 7 is a plate-like member made of metal and to which a bladder 31L (or 31R) to be described later is attached. The side bracket 7 has an upper portion extending rearward to form a substantially L-shaped configuration as viewed from side. The side bracket 7 has an upper end portion 7A, a front lower end portion 7B and a rear lower end portion 7C, which are bent outward in the lateral direction toward the seat back side frame 51.

Each side bracket 7 is fixed to the seat back side frame 51 (only one of them is shown in the drawing) in the vicinity of the lower end of the inner surface of the seat back side frame 51, by welding at three positions including a front end of the upper end portion 7A, the front lower end portion 7B, and the rear lower end portion 7C of the side bracket 7. A first fixing portion W1 and a second fixing portion W2, which are welded portions of the side bracket 7, are arranged one above the other in the upper-lower direction, while the a third fixing portion W3, which is a welded portion of the side bracket 7, is arranged at the rear of the first and second fixing portions W1, W2 in the front-rear direction (*i.e.*, direction orthogonal to the upper-lower direction along which the first fixing portion W1 and the second fixing portion W2 are arranged in line) and at a position between the fixing portion W1 and the second fixing portion W2 in the upper-lower direction (*i.e.*, direction along which the first fixing portion W1 and the second fixing portion W2 are arranged in line). In other words, the third fixing portion W3 is offset in the rear direction. Namely, the first fixing portion W1, the second fixing portion W2, and the third fixing portion W3 are arranged such that they form a triangle (*see* alternate long and short dash lines in the figure). In this embodiment, the first fixing portion W1 partly overlaps a protruding portion 51A provided on the inner surface of the seat back side frame 51 and protruding inward in the lateral direction. With this configuration, the mounting rigidity of the side bracket 7 is enhanced, so that the bladders 31R, 31L and the pressure-receiving member 56 can be more stably supported.

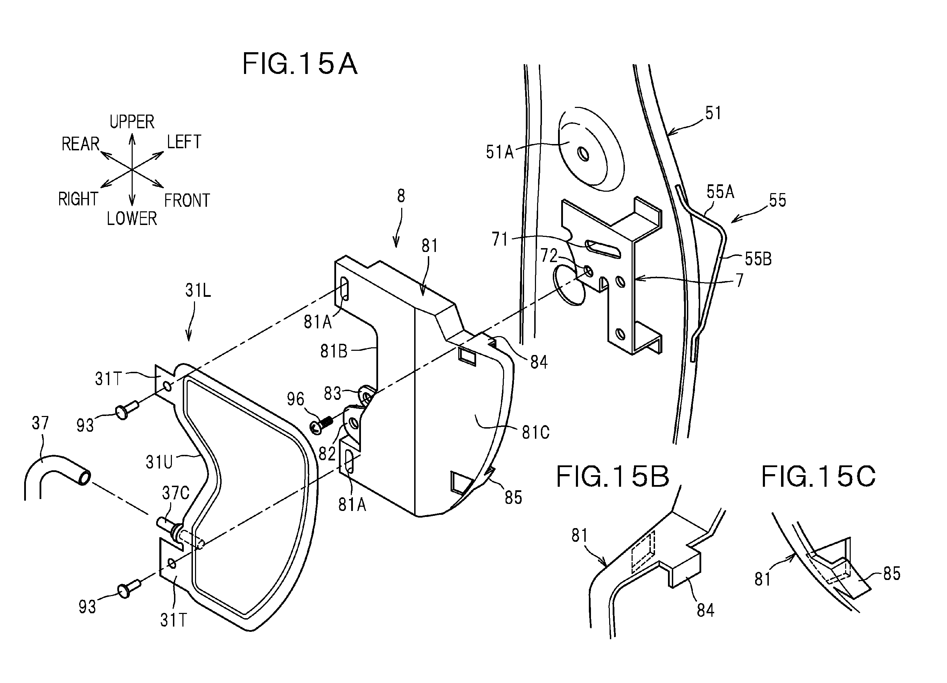

The side bracket 7 mainly includes an oblong hole 71 as an attachment member engageable portion for engagement with an end portion 58B of the lower connecting wire 58, and a fixing hole 72 as a bladder-fixing portion to which the bladders 31R, 31L are fixed through a plate member 8 to be described later (*see* FIG. 15A).

The oblong hole 71 is formed in the upper portion of the side bracket 7 such that one end of the oblong hole 71 is disposed between the first fixing portion W1 and the second fixing portion W2 and the oblong hole 71 extends diagonally downward in the front-rear direction toward the rear-side where the third fixing portion W3 is provided.

The fixing hole 72 is a circular through-hole, and is formed in the upper portion of the side bracket 7 at a position between the oblong hole 71 and the third fixing portion W3 and closer to the third fixing portion W3 (at a slightly lower position).

The right side bracket 7 fixed to the right seat back side frame 51 is laterally symmetrical to the left side bracket 7 as described above with reference to FIG. 10, and therefore detailed description thereof will be omitted.

### <Detailed structure of support device>

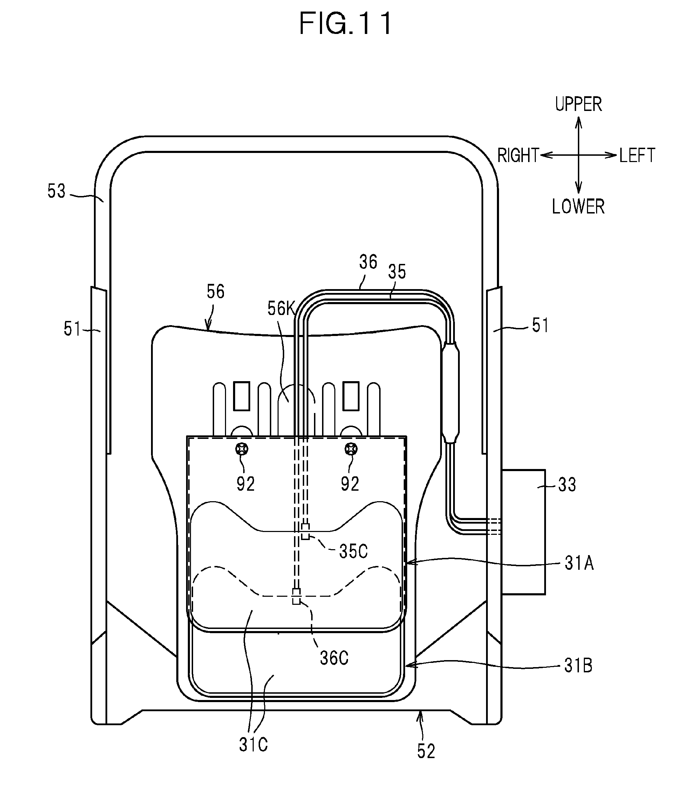

As best seen in FIG. 11, the bladders 31A, 31B are overlapped and attached together to the mount portions 56A of the pressure-receiving member 56 with the bladder 31A positioned at the front side and the bladder 31B positioned at the rear side. In the following description, the bladder 31A is also referred to as a "front-side bladder 31A" and the bladder 31B is also referred to as a "rear-side bladder 31B."

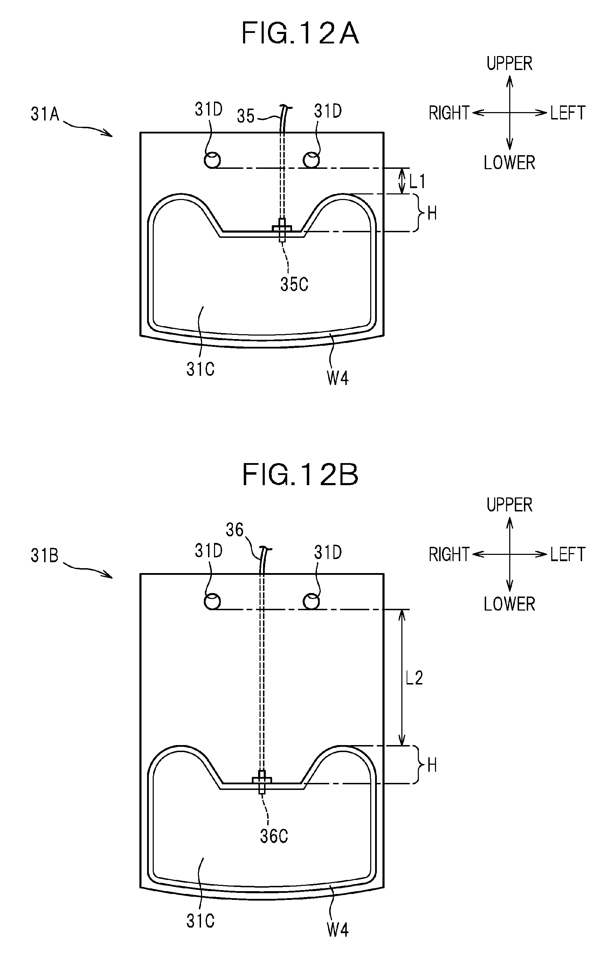

As seen in FIGS. 12A and 12B, each of the front-side bladder 31A and the rear-side bladder 31B is formed by bonding (*e.g*. welding) two plastic sheet-like members together, and mainly includes an air chamber 31C into which air supplied from the pump 32 flows, and engagement holes 31D as engagement portions.

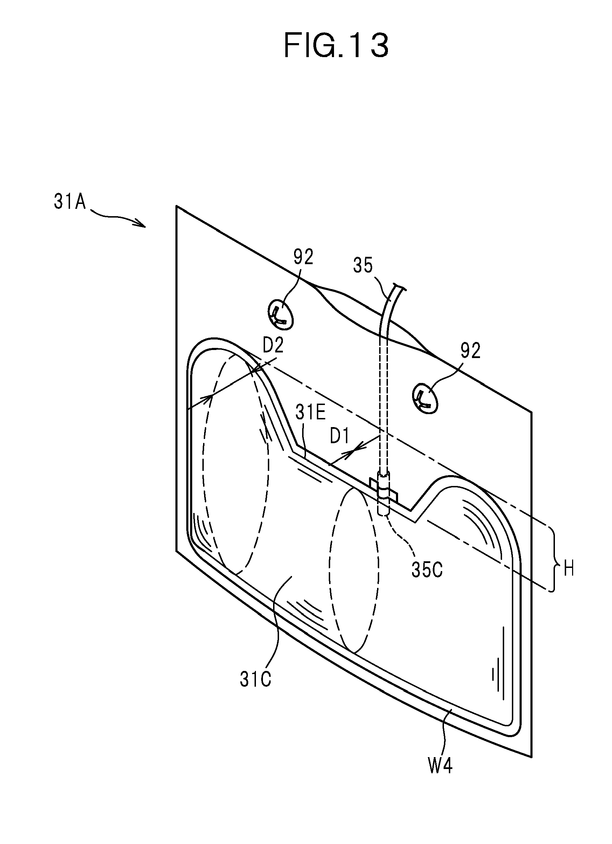

The air chamber 31C is formed by welding two sheet-like members together with a weld having a substantially U-shaped contour (*see* weld portion W4). To be more specific, as viewed from front, such as shown in FIG. 12, the upper center portion of the weld is recessed downward. Accordingly, each of the bladders 31A, 31B is configured such that when it inflates as seen in FIG. 13 (only the front-side bladder 31A is shown), the air chamber 31C is shaped to have a recess 31E by which the upper center portion of the air chamber 31 C is recessed downward. In other words, each of the bladders 31A, 31B is configured such that in a predetermined region H extending downward from the upper end of the air chamber 31C, the air chamber 31C is formed only at both right and left end portions. With this configuration, when each of the bladders 31A, 31B inflates, the thickness in the front-rear direction within the predetermined region H is thinner at the center portion (*i.e.,* thickness D1) than at the both right and left end portions (*i.e.*, thickness D2).

As seen in FIGS. 12A and 12B, the rear-side bladder 31B has a length L2 in the upper-lower direction from the upper end of the air chamber 31C to the lower end of the engagement holes 31D, and the length L2 is longer than a length L1 of the front-side bladder 31A in the upper-lower direction from the upper end of the air chamber 31C to the lower end of the engagement holes 31D. With this configuration, when the front-side bladder 31A and the rear-side bladder 31B are attached to the pressure-receiving member 56 (*see* FIG. 1), the air chamber 31C of the front-side bladder 31A and the air chamber 31C of the rear-side bladder 31B are arranged such that they are party overlapped but offset from each other in the upper-lower direction as viewed from front.

Two engagement holes 31D are arranged side by side in the lateral direction at an upper portion (at a region above the air chamber 31C) of each of the bladder 31A, 31B. As best seen in FIG. 11, the bladders 31A, 31B are aligned and overlapped in the front-rear direction with their upper end portions neatly aligned, and screws 92 are inserted into the engagement holes 31D and then fixed to the mount portions 56A provided on the pressure-receiving member 56. Accordingly, the bladders 31A, 31B are attached to the pressure-receiving member 56 (*see* also FIG. 9).

The hose 35 is connected to the air chamber 31C of the front-side bladder 31A through a tubular connector 35C, and the hose 36 is connected to the air chamber 31C of the rear-side bladder 31B through a tubular connector 36C. To be more specific, as seen in FIG. 13, each of the hoses 35, 36 passes through a gap between the two sheet-like members and then passes through a space between the two screws 92 (attachment holes 31D), at a region above a connecting portion in which the hose 35, 36 is connected to the air chamber 31C (*i.e.,* at a region above the connector 35C in FIG. 13), and finally it is connected to the air chamber 31C through the connector 35C, 36C at the bottom of the recess 31E formed in the upper portion of the air chamber 31C. As viewed from front, the connector 35C for the front-side bladder 31A and the connector 36C for the rear-side bladder 31B are offset from each other in the lateral direction, so that the hose 35 and the hose 36 do not overlap in the front-rear direction at the front-side of the pressure-receiving member 56. This can prevent unwanted load from being applied to the hoses 35, 36.

As best seen in FIG. 1, the bladders 31R, 31L are attached to the right and left seat back side frames 51 respectively through plate members 8 (*see* FIG. 15A).

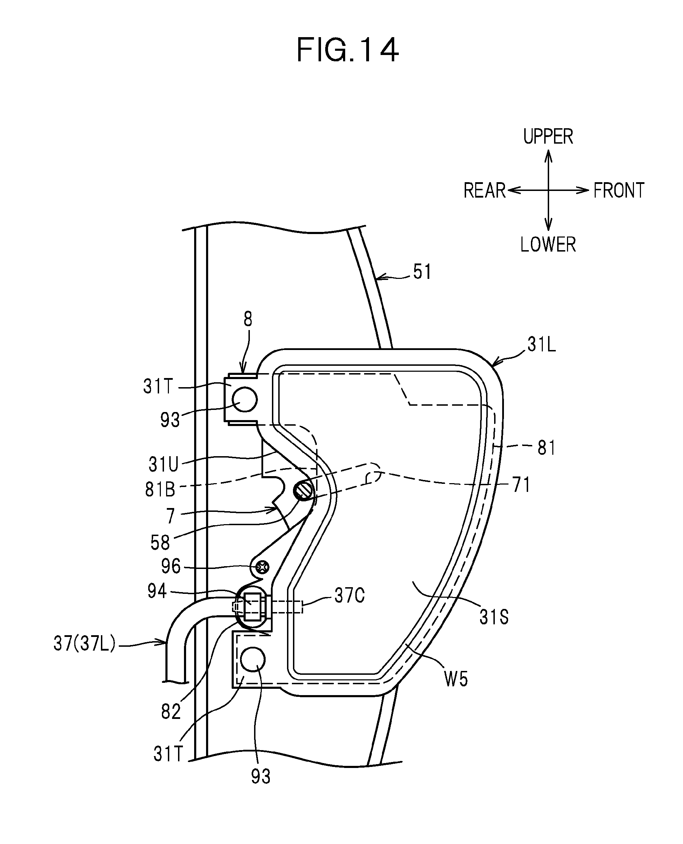

As seen in FIG. 14, the left-side bladder 31L is formed like the bladders 31A, 31B, by welding two plastic sheet-like members together. The bladder 31L mainly includes an air chamber 31S into which air supplied from the pump 32 flows, and attachment portions 31T used for attachment to the plate member 8 (seat back side frame 51), and a cutout portion 31U.

The air chamber 31S is formed by welding two sheet-like members together with a weld having a substantially U-shaped contour (*see* weld portion W5). To be more specific, as viewed from inside between the right and left seat back side frames 51, such as shown in FIG. 14, the rear center portion of the weld portion in the upper-lower direction is recessed forward to provide a recess.

Attachment portions 31T are tab-like members through which the bladder 31L is attached to the plate member 8. The attachment portions 31T extend rearward from the upper rear end portion and the lower rear end portion of the bladder 31L. The attachment portions 31T (rear end portions) of the bladder 31L are fixed to the plate member 8 by pin-shaped clips 93 and the plate member 8 is fixed to the seat back side frame 51, so that the bladder 31L is attached to the seat back side frame 51.

The cutout portion 31U is a recess formed at the rear portion of the bladder 31L and recessed forward. The cutout portion 31U is formed below the upper attachment portion 31T and above the lower attachment portion 31T (*i.e.,* between the two attachment portions 31T). In other words, the bladder 31L has the attachment portions 31T, which are provided above and below the cutout portion 31U. When the car seat 1 is assembled, the lower connecting wire 58, which is engaged with the oblong hole 71 of the side bracket 7 and serves as another member (another part discrete from the bladders 31R, 31L and the plate members 8), is located in the cutout portion 31U.

One end of the hose 37 is connected to the air chamber 31S of the bladder 31L through a tubular connector 37C made of metal or plastic, so that air from the hose 37 is supplied to the bladder 31L (air chamber 31S). The end of the hose 37 together with the connector 37C is fixed to a hose fixing portion 82 of the plate member 8, which will be described later, using a binding band 94 with a clip, at an insertion portion where the connector 37C is inserted into hose 37. The hose 37 is fixed to the seat back side frame 51 through the plate member 8 that is attached to the seat back side frame 51.

The right-side bladder 31R attached to the right seat back side frame 51 is laterally symmetrical to the left-side bladder 31L as described above with reference to FIG. 14, and therefore detailed description thereof will be omitted.

Arrangement (layout) of the hoses 34-37 will be described below.

As best seen in FIG. 4, the hose 34 for supplying air from the pump 32 to the control unit 33 has one end connected to the supply outlet 32A of the pump 32. The hose 34 extends rearward passing under the pan frame 42, the seat springs 45 and the rear-side connecting pipe 44 (*see* FIG. 1), and then passing behind the seat back frame 50 (*see* FIG. 8) and the other end of the hose 34 is connected to the control unit 33.

The hoses 35, 36 for supplying air from the control unit 33 to the bladders 31A, 31B have one ends connected to the control unit 33. The hoses 35, 36 extend upward along the left seat back side frame 51, and then forward to the front side of the pressure-receiving member 56 passing over an upper end of the pressure-receiving member 56, and as seen in FIG. 11, the other ends of the hoses 35, 36 are connected to the bladders 31A, 31B. As best seen in FIG. 8, the hoses 35, 36 are bundled together and retained at a rear left end portion of the pressure-receiving member 56. Since the upper end portion 56T of the pressure-receiving member 56 is recessed downward at its upper center portion in the lateral direction deeper than its both end portions, the hoses 35, 36 passing over the upper end of the pressure-receiving member 56 from the rear left end side toward the center portion in the lateral direction can be bent gently and smoothly to approach the upper end portion 56T at or in proximity to the upper center portion in the lateral direction. This makes it possible to arrange the hoses 35, 36 compactly in the upper-lower direction. Further, as seen in FIG. 11 (*see* also FIG. 7), the front upper center portion of the pressure-receiving member 56 (between the recesses 56B) is recessed rearward to provide a recess 56K, so that interference between the pressure-receiving member 56 and the hoses 35, 36 extending forward and then downward along the front side of the pressure-receiving member 56 can be suppressed.

As seen in FIG. 6A, the hose 37 for supplying air from the control unit 33 to the right-side and left-side bladders 31R, 31L has one end connected to the control unit 33. The hose 37 extends along the member frame 52, and the two other ends of the bifurcated hose sections are connected to the bladders 31R, 31L. To be more specific, the hose 37 extending out from the control unit 33 (hereinafter referred to as an "inlet tube 37A") extends downward along the left seat back side frame 51 and then extends toward the center portion in the lateral direction along the front surface of the rear wall portion 52A of the member frame 52. The hose 37 is bifurcated into right and left sections at a region around the center portion of the rear wall portion 52A in the lateral direction (between the right and left seat back side frames 51), more specifically, at a region slightly right from the center portion of the rear wall portion 52A in the lateral direction. A left supply tube 37L connecting a bifurcated portion 37B and the bladder 31L extends from the bifurcated portion 37B, passing under the inlet tube 37A and extending diagonally upward and leftward at the front-side of the rear wall portion 52A. A right supply tube 37R connecting the bifurcated portion 37B and the bladder 31R extends from the bifurcated portion 37B, passing along the front-side of the rear wall portion 52A in the lateral direction and then extending diagonally upward and rightward.

As best seen in FIG. 6B, the hose 37 (inlet tube 37A, left supply tube 37L, and right supply tube 37R not shown in FIG. 6B) is arranged along a corner 52C that is formed by the rear wall portion 52A and the flange portion 52B, at a region around the center portion of the member frame 52 in the lateral direction. Accordingly, the hose 37 is protected by the member frame 52 because the rear side thereof is covered with the rear wall portion 52A, and in particular the top side thereof is covered with the flange portion 52B at the center portion of the member frame 52 in the lateral direction.

As best seen in FIG. 6A, the hose 37 is fixed to the member frame 52 at several places using binding bands 95A-95C. To be more specific, the inlet tube 37A is fixed by the binding band 95A to the lower surface of the flange portion 52B at the center portion of the flange portion 52B in the lateral direction. At a position below and left side of this fixing portion, the inlet tube 37A and the left supply tube 37L are bundled together by one biding band 95B and fixed to the front surface of the rear wall portion 52A. Further, at a position below the bent portion 58A of the lower connecting wire 58, the inlet tube 37A, the left supply tube 37L and the right supply tube 37R are bundled together by one binding band 95C and fixed to the front surface of the rear wall portion 52A.

Binding bands 95C are provided at the upper end portion of the member frame 52. In other words, each of the binding bands 95C is provided at a position near the lower end of the corresponding bent portion 58A. Therefore, as compared to the arrangement in which the binding bands 95C are provided at positions far from the bent portions 58A (*e.g*., at the lower end of the member frame 52), the length of the hose 37 (right supply tube 37R and left supply tube 37L) can be reduced.

As seen in FIG. 15A, the plate member 8 has a generally plate-like shape and configured to regulate the direction along which the bladder 31L inflates. The plate member 8 is disposed adjacent to and at an outer side of the bladder 31L in the lateral direction. The plate member 8 is made of plastic, and mainly includes a main body 81, a hose fixing portion 82, a frame fixing portion 83, and claws 84, 85.

A pair of engagement holes 81A, each having an elongated shape, are formed in the upper rear end portion and the lower rear end portion of the main body 81, and clips 93 used for the attachment of the bladder 31L (attachment portions 31T) are engaged with the engagement holes 81A. Further, a cutout portion 81B having a shape corresponding to the cutout portion 31U of the bladder 31L and recessed toward the front side is provided at the rear side of the main body 81 between the upper engagement hole 81A and the lower engagement hole 81A. As best seen in FIG. 14, the cutout portion 81B is formed such that it substantially coincides with the cutout portion 31U of the bladder 31L when the bladder 31L is attached to the plate member 8, and as viewed from inside between the right and left seat back side frames 51, the rear end of the oblong hole 71 formed in the side bracket 7 is exposed to view. Like the cutout portion 31U of the bladder 31L, the lower connecting wire 58 engaged with the oblong hole 71 of the side bracket 7 is located in the cutout portion 81B when the car seat 1 is assembled.

As seen in FIG. 15A, the main body 81 has a slanted surface 81C at a front side of a side surface (right-side surface in the lateral direction). The slanted surface 81C extends outward in the lateral direction (diagonally frontward and leftward in the case of the left-side plate member 8) relative to a rear portion of the main body 81 which extends in a direction substantially along the front-rear direction.

The hose fixing portion 82 is a portion to which the binding band 94 for fixing the end of the hose 37 and the connector 37C (*see* FIG. 14) is attached. The hose fixing portion 82 is formed to extend rearward from a lower portion (in the upper-lower direction) in the bottom of the cutout portion 81B. The hose fixing portion 82 has a through-opening (shown without a reference numeral) engageable with a clip portion of the binding band 94.

The frame fixing portion 83 and the claws 84, 85 are used for fixing the plate member 8 to the seat back side frame 51. The frame fixing portion 83 has a generally plate-like shape and extends rearward from the bottom of the cutout portion 81B at a portion above the hose fixing portion 82. The frame fixing portion 83 has a through-opening (shown without a reference numeral) into which a screw 96 is inserted. The claws 84, 85 are provided at an outer side surface (left-side surface in the lateral direction) of the main body 81. The claw 84 sticks out laterally outward from the upper end of the front side of the outer side surface and is bent down (*see* also FIG. 15B), and the claw 85 sticks out laterally outward from a lower portion of the front side of the outer side surface and is bent rearward (*see* also FIG. 15C).

These claws 84, 85 are configured such that when the plate member 8 is attached to the seat back side frame 51, the claws 84, 85 are hooked onto a rod member 55 fixed to the front surface of the seat back side frame 51 by welding or other suitable means. To be more specific, the claw 84 hooks from above onto a first extension portion 55A extending in a direction substantially along the front-rear direction of the rod member 55, and the claw 85 hooks from the front side onto a second extension portion 55B extending in a direction substantially along the upper-lower direction of the rod member 55.

For the attachment of the bladder 31L to the seat back side frame 51, the bladder 31L (attachment portions 31T) is attached first to the plate member 8 (engagement holes 81A) using the clip 93. Then, the plate member 8 to which the bladder 31L has been attached is attached to the seat back side frame 51 in such a manner that the claws 84, 85 of the plate member 8 are hooked onto the rod member 55 fixed to the seat back side frame 51. Thereafter, the screw 96 is inserted into the through-hole of the frame fixing portion 83, and threadedly engaged with the fixing hole 72 of the side bracket 7 which has been fixed to the seat back side frame 51, so that the bladder 31L is fixed to the seat back side frame 51.

The right-side plate member 8 fixed to the right seat back side frame 51 is laterally symmetrical to the left-side plate member 8 as described above with reference to FIG. 14 and 15, and therefore detailed description thereof will be omitted.

### <Operation of support device>

Operation of the support device 3 will be described below.

When an occupant sits on the car seat 1 after adjustment of the supporting positions of the bladders 31A, 31B, as seen in FIG. 13, the upper body (lumbar region) of the occupant is supported from back and from right and left sides such that a thinner portion located behind the upper body and formed by the bladders 31A, 31B at the center portion in the lateral direction, *i.e.,* a recessed region which is recessed from the right and left end portions supports the back side of the upper body, while the right and left end portions (of the air chambers 31 C) hold the upper body from right and left sides. In particular, according to this embodiment, the air chamber 31C is present only at both right and left end portions in the predetermined region H, so that the air chamber 31C in this predetermined region H has a greater range of motion at the right and left sides. This causes the bladders 31A, 31B to be deformed easily into a shape corresponding to the upper body of the occupant. Therefore, the lumbar region of the occupant can be supported reliably from the back side.

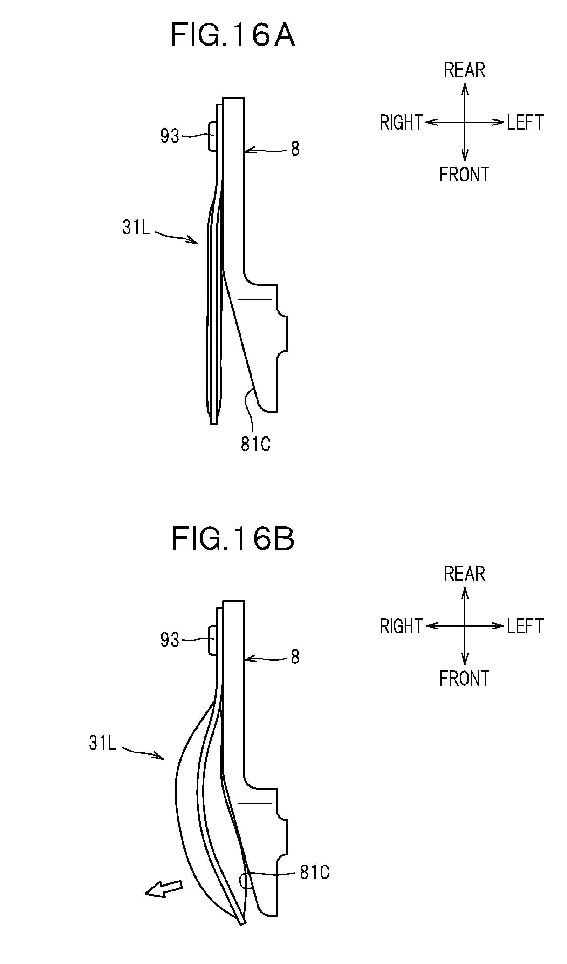

When the occupant manipulates the controller (not shown) to adjust the supporting positions for the right and left sides of his/her lumbar region, the bladders 31R, 31L apt to inflate sideward to the right and left directions, in particular, during inflation of the bladders 31R, 31L. However, as best seen in FIGS. 16A and 16B (in which only the left-side bladder 31L is shown), the plate member 8 regulates the inflating direction and prevents the bladder 31R, 31L from inflating outward in the lateral direction. As a result, the bladder 31R, 31L inflates inward in the lateral direction. Further, since the bladders 31R, 31L are covered with a cushion material (not shown) and a car seat skin material (not shown), when the bladders 31R, 31L gradually inflate, they are pressed against the cushion material and the like and gradually deform such that the front-sides thereof conform the slanted surfaces 81C of the plate members 8. Accordingly, each of the bladders 31R, 31L inflates inward in the lateral direction and diagonally forward (*see* arrow in the figure), so that the lumbar region of the occupant can be supported reliably from diagonally rearward positions in the lateral direction.

### <Advantageous effects>

The following advantageous effects can be achieved by the car seat 1 according to this embodiment.

Since, as seen in FIG. 13, each of the bladders 31A, 31B is configured such that the center portion of the air chamber 31C is thinner in thickness in the front-rear direction than the both end portions in an inflating state of the bladder 31A, 31B (*i.e.*, thickness D1 of the center portion is smaller than thickness D2 of the both right and left end portions), the upper body of an occupant seated on the vehicle seat fits into a recess of the center portion, and at the same time, the upper body of the occupant is supported and wrapped from right and left sides. This can improve holding of the occupant by the support device 3.

Since the air chamber 31C is formed only at the both end portions in the predetermined region H of the bladder 31A, 31B, the bladder 31A, 31B deforms easily into a shape corresponding to the upper body of the occupant. This can further improve holding of the occupant by the support device 3.

Since each of the hoses 35, 36 passes through a space between two screws 92 (engagement holes 31D) for mounting the bladders 31A, 31B and is connected to the upper portion of the air chamber 31C, the end (connecting portion) of the hose 35, 36 can be stabilized in a state where the bladders 31A, 31B are attached to the pressure-receiving member 56. To be more specific, since, after attachment of the bladder 31A, 31B to the pressure-receiving member 56, the bladder 31A, 31B is not easily deflectable in a space between the two engagement holes 31D around the periphery of the air chamber 31C, the end of the hose 35, 36 to be connected in this space can be stabilized (held so as not to move easily) as compared to the arrangement where the hose 35, 36 is connected to other portions around the periphery of the air chamber 31C. This can restrain a load from being applied to the end of the hose 35, 36, so as to prevent the hose 35, 36 from being come off the bladder 31A, 31B.

Since each of the bladder 31A, 31B is configured such that the upper center portion of the air chamber 31C in the lateral direction is recessed downward to provide a recess 31E, and the hose 35, 36 is connected to the air chamber 31C in this recess 31E, the connecting portion (connector 35C) where the hose 35, 36 (in particular hose 35) and the air chamber 31C are connected together can be positioned such that the upper end of the connecting portion is at the same level or lower than the upper end of the air chamber 31C. Therefore, the whole size of the bladder 31A, 31B to which the hoses 35, 36 have been connected can be reduced in the upper-lower direction.

Since each of the bladders 31A, 31B is formed by bonding two sheet-like members together, and the hose 35, 36 is connected to the air chamber 31C after passing through a gap between the two sheet-like members, the sheet-like members can restrict movement (in particular, movement in the front-rear direction) of the end of the hose 35, 36. This can restrain unwanted load from being applied to the hose 35, 36 as well as prevent interference between the hose 35, 36 and another member, so as to prevent damage of the hose 35, 36.

Since, as seen in FIGS. 7 and 9, the mount portions 56A of the pressure-receiving member 56 are formed as top portions of the protruding portions 56C, each of which protrudes from the bottom of the recess 56B formed in the pressure-receiving member 56, the entire shape of the pressure-receiving member 56 becomes uneven, and hence the rigidity of the pressure-receiving member 56 can be improved. Further, since the bladders 31A, 31B are attached to the rigid mount portions 56A, the stability of the bladders 31A, 31B can be enhanced.

Since, as seen in FIG. 14, each of the bladders 31R, 31L has a cutout portion 31U, it is possible to suppress (avoid) interference between the bladders 31R, 31L and the lower connecting wire 58 (another member). Further, the bladder 31R, 31L can be disposed closer to the lower connecting wire 58 as compared to the configuration in which a cutout portion is not provided in the bladder 31R, 31L. Therefore, the bladders 31R, 31L and the lower connecting wire 58 are arranged compactly, so that the size of the car seat 1 can be further reduced.

Since each of the bladders 31R, 31L has a pair of attachment portions 31T at positions above and below the cutout portion 31U, it is possible to stably attach the bladders 31R, 31L to the plate members 8 (seat back side frames 51) while suppressing interference between the bladders 31R, 31L and the lower connecting wire 58.

Since the lower connecting wire 58 is located in the cutout portion 31U, the bladder 31R, 31L and the lower connecting wire 58 can be arranged closer to each other as compared to the arrangement where a part of the lower connecting wire 58 is located in the cutout portion 31U. Accordingly, the bladder 31R, 31L and the lower connecting wire 58 are arranged more compactly, so that the size of the car seat 1 can be further reduced.

Since the air chamber 31S of the bladder 31R, 31L extends around the cutout portion 31U to surround the cutout portion 31U from three sides, i.e., at front, upper and lower sides of the cutout portion 31U, the volume of the air chamber 31S can be enlarged while suppressing interference between the bladder 31R, 31L and the lower connecting wire 58. Accordingly, the bladder 31R, 31L has a greater range of motion, so that the adjustable range of the support device 3 can be increased.

Since, as seen in FIG. 6A, the hose 37 is bifurcated at an intermediate portion thereof in the lateral direction and between the right and left seat back side frames 51 into two sections, the hoses 37 from the bifurcated portion 37B to the right and left bladders 31R, 31L have substantially the same length (*i.e*., the length of the right supply tube 37R is substantially the same as that of the left supply tube 37L). This makes it possible to substantially evenly supply air to the right and left bladders 31R, 31L, so that the right and left bladders 31R, 31L can be deformed substantially uniformly with each other.

Since, as seen in FIG. 6B, the hose 37 is arranged along the corner 52C formed by the rear wall portion 52A and the flange portion 52B of the member frame 52, the hose 37 can be protected by a relatively simple configuration. Further, the movement of the hose 37 (in the rear direction or in the upper direction) can be restrained by the rear wall portion 52A and the flange portion 52B. Accordingly, for example, the risk of damage of the hose 37 can be greatly reduced.

Since, as seen in FIG. 14, a pair of plate members 8 are provided and each of the plate members 8 has a cutout portion 81B having a shape corresponding to the cutout portion 31U of the bladder 31R, 31L, it is possible to change the direction along which the bladder 31R, 31L inflates to a predetermined direction while suppressing interference between the plate member 8 and the lower connecting wire 58. Further, since the cutout portion 81B is provided in the plate member 8, the installation space for the plate member 8 can be minimized.

Further, since the hose 37 is fixed to the plate member 8, together with the connector 37C, at the insertion portion where the connector 37C is inserted into the hose 37, the end of the hose 37 and the connector 37C can be fixed at the same time. This can improve the workability for assembling the car seat 1. Further, since the flexible hose 37 is fixed to the plate member 8, together with the rigid connector 37C, at the insertion portion where the connector 37C is inserted into the hose 37, twisting of the hose 37 can be suppressed as compared to the configuration in which the hose 37 is fixed directly to the plate member 8 without the connector 37C.

Although one embodiment of the present invention has been described above, the present invention is not limited to this specific embodiment. Specific configuration of each of the parts may be changed or modified where necessary without departing from the scope of the appended claims.

In the above embodiment, the car seat 1 includes two bladders 31A, 31B for supporting the lumbar region of an occupant from rear side. However, the present invention is not limited to this specific configuration. For example, the number of such bladders may be one. Further, three or more bladders may be provided instead.

In the above embodiment, the pressure-receiving member 56 is exemplified as a bladder mount member. However, the present invention is not limited to this specific embodiment. For example, the bladder mount member may be a pipe extending between the right and left seat back side frames 51.

In the above embodiment, each of the hoses 35, 36 is connected to the air chamber 31C in the recess 31E. However, the present invention is not limited to this specific configuration. For example, with reference to FIG. 13, each of the hoses 35, 36 may be connected to the upper portion of the air chamber 31C outside the recess 31E.

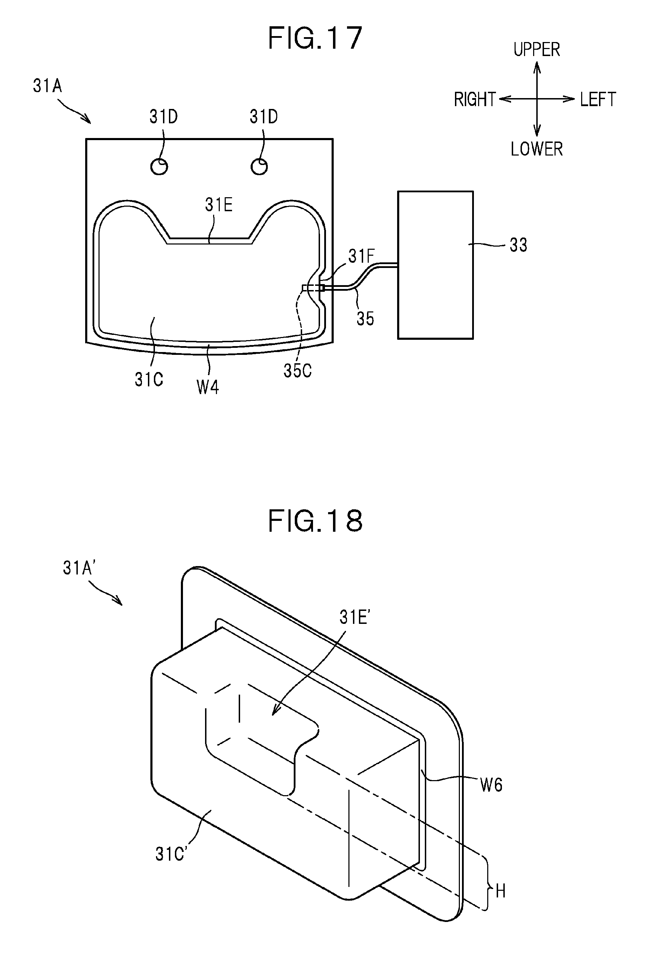

In the above embodiment, each of the hoses 35, 36 is connected to the upper portion of the air chamber 31C after passing through the space between the two engagement holes 31D. However, the present invention is not limited to this specific configuration. For example, as seen in FIG. 17, the hose 35 may be connected to the left side of the air chamber 31C. Alternatively, although not shown in the drawings, the hose 35 may be connected to the right side or the lower side of the air chamber 31C.

According to this modification, as seen in FIG. 17, the hose 35 is connected from the same side as the control unit 33 is disposed. In this modification, the length of the hose 35 for connecting the control unit 33 and the bladder 31A can be reduced. Further, a recess 31F which is recessed deeper toward the air chamber 31C is provided at a region where the hose 35 is connected to the air chamber 31C, so that the left end of the connector 35C can be positioned at or inward of the left end of the air chamber 31C in the lateral direction. This makes it possible to reduce the whole size of the bladder 31A to which the hose 35 has been connected.

In the above embodiment, each of the bladders 31A, 31B is configured such that the air chamber 31C is present only at both right and left end portions in the predetermined region H. However, the present invention is not limited to this specific configuration. For example, as seen in FIG. 18, the bladder 31A' may be configured such that the air chamber 31 C' is present in the predetermined region H not only at both right and left end portions but also at the center portion in the lateral direction.

In an inflate state of the bladder 31A' as shown in FIG. 18, the air chamber 31C' has the front side which is recessed downward and rearward at the upper center portion in the lateral direction to provide a recess 31E'. The vehicle seat equipped with this bladder 31A' can also improve holding of an occupant by the support device.

The bladder 31A' can be formed by bonding two sheet-like members together. To be more specific, one of the sheet-like members is blow molded to form front, upper, lower, right and left walls in the drawing, and the other sheet-like member is joined thereto by welding from the rear side in the drawing (*see* welded portion W6).

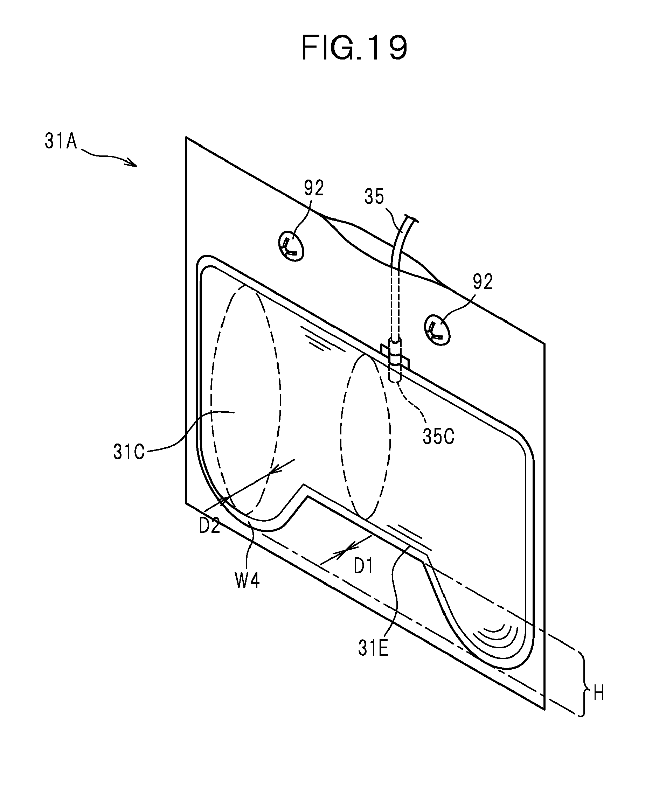

In the above embodiment, as seen in FIG. 13, each of the bladders 31A, 31B is configured such that the air chamber 31C is present only at both right and left end portions in the predetermined region H extending downward from the upper end of the air chamber 31C. However, the present invention is not limited to this specific configuration. For example, as seen in FIG. 19, the bladder 31A may be configured such that the air chamber 31C is present only at both right and left end portions in a predetermined region H extending upward from the lower end of the air chamber 31C. In other words, in an inflating state of the bladder 31A, 31B, the air chamber 31C may be recessed upward at its lower center portion in the lateral direction to provide a recess 31E. With this configuration too, the center portion of the air chamber has a portion which is thinner in thickness in the front-rear direction than the both end portions in an inflating state of the bladder.

In the above embodiment, each of the bladders 31R, 31L has a pair of attachment portions 31T at positions above and below the cutout portion 31U. However, the present invention is not limited to this specific configuration. For example, one attachment portion may be provided above or below the cutout portion. Further, more than two attachment portions may be provided.

According to the arrangement where only one attachment portion is provided above or below the cutout portion, one cutout portion is provided above or below the attachment portion.

In the above embodiment, the air chamber 31S of each of the bladders 31R, 31L extends around the cutout portion 31U at front, upper and lower sides of the cutout portion 31U. However, the present invention is not limited to this specific configuration. For example, with reference to FIG. 14, each of the bladders 31R, 31L may be configured such that the air chamber 31C extends only at the front side of the cutout portion 31U. Alternatively, the air chamber 31C may extend to surround the cutout portion 3U from two sides, i.e., at front and upper sides or at front and lower sides.

In the above embodiment, the hose 37 is bifurcated at a region around the center portion of the rear wall portion 52A in the lateral direction (at a region slightly right from the center portion of the rear wall portion 52A). However, with reference to FIG. 6, it is preferable that the hose 37 is bifurcated at the center portion of the rear wall portion 52A in the lateral direction. With this configuration, since the right supply tube 37R and the left supply tube 37L can be the same length, it is possible to supply air more evenly to the right and left bladders 31R, 31L, so that the right and left bladders 31R, 31L can be deformed more uniformly with each other other.

Further, according to the present invention, the hose may be bifurcated into two sections at one end portion in the lateral direction between the right and left seat back side frames. In this embodiment too, it is preferable that the lengths of the two sections from the bifurcated portion to the right and left bladders are substantially the same. Further, instead of using a hose bifurcated into two section, two separate hoses may be used for supplying air to the right and left bladders.

In the above embodiment, the member frame 52 as a joint member is shaped to have a substantially L-shaped section including the rear wall portion 52A for covering the rear-side of the hose 37 and the flange portion 52B for covering the upper side of the hose 37. However, the present invention is not limited to this specific configuration. For example, with reference to FIG. 6, the member frame 52 may be shaped to have a substantially U-shaped section including a rear wall portion 52A (first wall portion) for covering the rear-side of the hose 37 and a pair of upper and lower flange portions 52B (second wall portions) for covering both the upper side and the lower side of the hose.

In the above embodiment, the hose 37 is arranged along the front surface of the rear wall portion 52A. However, the present invention is not limited to this specific configuration. For example, with reference to FIG. 6, the hose 37 may be arranged along the rear surface of the rear wall portion 52A (first wall portion). In this embodiment, the rear wall portion 52A covers the front side of the hose 37. According to the configuration in which the hose 37 is arranged along the rear surface of the rear wall portion 52A, it is preferable that the flange portion 52B (second wall portion) is formed to extend rearward from an end portion of the rear wall portion 52A.

Although one specific embodiment of the plate members 8 has been explained in the above embodiment, the present invention is not limited to this specific configuration. For example, with reference to FIG. 15A, each plate member 8 may not have claws 84, 85. Instead, the plate member 8 may be fixed to the side bracket 7 and the seat back side frame 51 using a plurality of screws.

In the above embodiment, the right and left bladders 31R, 31L, the ends of the hose 37, and the connectors 37C are fixed to the seat back side frames 51 through the plate members 8. However, the present invention is not limited to this specific configuration. For example, the right and left bladders, the ends of the hose, and the connectors may be directly fixed to the seat back side frames without the plate members.

In the above embodiment, the lower connecting wire 58 (another member) is located in the cutout portion 31U. However, the present invention is not limited to this specific arrangement. For example, only a part of the another member may be located in the cutout portion.

In the above embodiment, the lower connecting wire 58 is exemplified as another member. However, the present invention is not limited to this specific embodiment. As long as it is disposed around the right and left bladders and may interfere with the bladders, any part may be the another member.

In the above embodiment, the recess is exemplified as the cutout portion 31U of the bladders 31R, 1L. However, the present invention is not limited to this specific configuration. For example, the cutout portion may be a through-hole.

In the above embodiment, the car seat 1 for an automobile is exemplified as an example of the vehicle seat. However, the present invention is not limited to this specific example, and the vehicle seat according to the present invention is applicable to other vehicle seat, such as a seat for marine vessel and a seat for aircraft.

In the above embodiment, the seat body 2 includes the seat bottom 4 and the seat back 5 as discrete parts (*i.e.,* the seat back 5 is attached to the seat bottom 4 through the reclining mechanism). However, the present invention is not limited to this specific configuration. For example, the seat bottom side frames and the seat back side frames may be integrally formed, and such side frames may be included as constituent parts of the seat body.

## Claims

1. A vehicle seat (1) comprising:
a seat body (2) including a seat bottom (4) and a seat back (5);
a support device (3) provided in the seat body (2) and configured to adjust supporting positions for supporting a lumbar region of an occupant;
a pair of right and left seat back side frames (51) constituting right and left frames of the seat back (5); and
at least one bladder (31A, 31B) configured to be inflatable and deftatable to change the supporting positions and arranged between the right and left seat back side frames (51) and constituting the support device (3),
wherein the bladder (31A, 31B) comprises an air chamber (31C) having a center portion and both end portions along a lateral direction, and the center portion of the air chamber (31 C) has a portion which is thinner in thickness in the front-rear direction than the both end portions in an inflating state of the bladder (31A, 31B).

2. The vehicle seat (1) according to claim 1, wherein the air chamber (31C) is formed only at the both end portions in a predetermined region (H) extending downward from an upper end of the air chamber (31 C).

3. The vehicle seat (1) according to claim 1 or 2, further comprising a bladder mount member (56) which is disposed between the right and left seat back side frames (51) and to which the bladder (31A, 31B) is attached, wherein the bladder (31A, 31B) is attached to the bladder mount member (56) through two engagement portions (31D) arranged side by side in the lateral direction at an upper portion of the bladder (31A, 31B), and wherein a hose (35, 36) for supplying gas from a pump (32) to the air chamber (31C) passes through between the two attachment portions (31D) and is connected to an upper portion of the air chamber (31 C).

4. The vehicle seat (1) according to any one of claims 1 to 3, wherein the bladder (31A, 31B) has a recess (31E) by which at least the center portion of the air chamber (31C) is recessed downward in the inflating state of the bladder (31A, 31B), and wherein a hose (35, 36) for supplying gas from a pump (32) to the air chamber (31C) is connected to the air chamber (31C) in the recess (31E).

5. The vehicle seat (1) according to claim 4, wherein the bladder (31A, 31B) is formed by bonding two sheet-like members together, and wherein the hose (35, 36) passes through a gap between the two sheet-like members at a region above a connecting portion in which the hose (35, 36) is connected to the air chamber (31C).

6. The vehicle seat (1) according to any one of claims 1 to 5, further comprising a plate-like bladder mount member (56) which is disposed between the right and left seat back side frames (51) and to which the bladder (31A, 31B) is attached, wherein the bladder mount member (56) has at least one mount portion (56A) for attachment of the bladder (31A, 31B), and wherein the mount portion (56A) is formed on a top portion of a protruding portion (56C), which protrudes forward from a bottom of a recess (56B) formed in the bladder mount member (56) and recessed backward.

7. The vehicle seat (1) according to claim 1, further comprising right and left support members (31R, 31L) attached to the right and left seat back side frames (51), respectively, and each configured to deform or move to change the supporting positions, wherein each of the right and left support members (31R, 31L) is respectively attached to the right and left seat back side frames (51) at a rear end portion of the support member (31R, 31L), which serves as an attachment portion (31T) used for attachment to the seat back side frame (51), and a cutout portion (31U) for preventing interference between the support member (31R, 31L) and another member (58) is provided at a rear portion of the support member (31R, 31L) above or below the attachment portion (31T).

8. The vehicle seat (1) according to claim 7, wherein each of the right and left support members (31R, 31L) has a pair of attachment portions (31T) for attachment to the seat back side frame (51) at positions above and below the cutout portion (31U).

9. The vehicle seat (1) according to claim 7 or 8, wherein the another member (58) is located in the cutout portion (31U).

10. The vehicle seat (1) according to any one of claims 7 to 9, wherein each of the right and left support members (31R, 31L) is a bladder having an air chamber (31S) and configured to be inflatable and deflatable for deformation, and wherein the air chamber (31 S) extends around the cutout portion (31U).

11. The vehicle seat (1) according to any one of claims 7 to 10, further comprising right and left bladders (31R, 31L) each configured to be inflatable and deflatable for deformation, a pump (32) for supplying gas to the right and left bladders (31R, 31L), each of which bladders serves as the support member (31R, 31L), and a hose (37) for supplying gas from the pump (32) to the right and left bladders (31R, 31L), wherein the hose (37) is bifurcated at an intermediate portion thereof in the lateral direction and between the right and left seat back side frames (51) into two sections which are connected to the right and left bladders (31R, 31L), respectively.

12. The vehicle seat (1) according to claim 11, further comprising a plate-like joint member (52) disposed to extend between lower portions of the right and left seat back side frames (51) and configured to connect the right and left seat back side frames (51), wherein the hose (37) is disposed along the joint member (52), wherein the joint member (52) has a first wall portion (52A) covering a front side or a rear side of the hose (37), and a second wall portion (52B) extending from one of an upper end and a lower end of the first wall portion (52A) and covering an upper side or a lower side of the hose (37), and wherein the hose (37) is arranged along a corner (52C) formed by the first wall portion (52A) and the second wall portion (52B).

13. The vehicle seat (1) according to any one of claims 10 to 12, further comprising a pair of plate members (8) each disposed adjacent to and at an outer side of the bladder (31R, 31L) in the lateral direction and configured to regulate a direction along which the bladder (31R, 31L) inflates, wherein each of the plate members (8) has a cutout portion (81B) having a shape corresponding to the cutout portion (31U) of the support member (31R, 31L), so as to prevent interference with the another member (58).

14. The vehicle seat (1) according to claim 11 or claim 12, further comprising a pair of tubular connectors (37C) each configured to connect the bladder (31R, 31L) and an end of the hose (37) and to allow gas flowed from the hose (37) to be supplied to the bladder (31R, 31L), wherein the hose (37) is fixed to the seat back side frame (51), together with the tubular connector (37C), at an insertion portion where the tubular connector (37C) is inserted into the hose (37).
